# EUROPEAN PATENT SPECIFICATION

(11) **EP 3 756 999 B1**
(45) Date of publication and mention of the grant of the patent: **11.05.2022**
(21) Application number: 19400016.2
(22) Date of filing: 27.06.2019
(51) Int. Cl.: B64C 27/59, B64C 13/30, F16C 1/14, B64C 27/56

(54) **A FLEXIBLE KINEMATICS ELEMENT WITH INPUT-OUTPUT LINEARIZATION**
FLEXIBLES KINEMATIKELEMENT MIT EINGABE-AUSGABE-LINEARISIERUNG
ÉLÉMENT CINÉMATIQUE FLEXIBLE AVEC UNE LINÉARISATION D'ENTRÉE ET DE SORTIE

(43) Date of publication of application: 30.12.2020
(73) Proprietor: AIRBUS HELICOPTERS DEUTSCHLAND GmbH, 86609 Donauwörth (DE)
(72) Inventor: Steger, Justus, D-91413 Neustadt A.D. Aisch (DE); Schmid, Emanuel, D-86685 Huisheim (DE); Schweighöfer, Peter, D-85368 Moosburg (DE)
(74) Representative: GPI Brevets

(56) References cited:
- US-A- 4 407 167
- US-A- 4 819 896
- US-A- 5 431 256
- US-B2- 9 950 783

## Description

The present embodiments relate to a rotorcraft, and, more particularly, to an apparatus for transmitting a mechanical control signal in a rotorcraft from a point of introduction to a point of application.

Conventionally, a pilot controls a rotorcraft by commands that are transferred from a pilot input device, which is sometimes also referred to as an inceptor, to servo-actuators on the upper deck and tail boom. Nowadays, many rotorcrafts still use mechanical links between inceptors and servo-actuators. These mechanical links often take the form of levers and rods which transmit mechanical control signals through a rotational movement of the connection points between the rods and levers on a circular track around a center of rotation.

A mechanical inceptor is usually coupled to a flexible kineṁatics element, and the mechanical control signals are transmitted via these flexible kinematics elements from the pilot area to servo-actuators on the upper deck.

Flexible kinematics elements are well-known in the art. Examples include sliding control cables, which are sometimes also referred to as Bowden style control cables, and ball bearing control cables.

Flexible kinematics elements usually have an outer conduit in which a cable or race is embedded. A mechanical control signal is transmitted through the flexible kinematics element by pushing or pulling on the cable or race, while the conduit is held in the same position.

The flexible kinematics element is at its ends connected to a mechanical element that often takes the form of a lever, which performs a rotational movement on a circular track around a center of rotation.

The document WO 2004/028901 A2 describes a control system for a rotorcraft. The control system includes a stepped mixing linkage, such that a selected amount of right-left lateral cyclic output is generated for certain amounts of forward-aft cyclic input. The stepped mixing linkage includes two supporting links and a floating link pivotally coupled between the two supporting links. This arrangement is sometimes also referred to as a Watt's linkage. The ratio of the lengths of the two supporting links to the length of the floating link is small, thereby generating a selected lateral sinusoidal output, a selected rotation of the sinusoidal output, and a selected ramped output in response to each forward-aft pilot input command. In other words, the Watt's linkage's kinematic characteristic is used to generate a non-linear stepped motion to compensate cross coupling between control axes. In particular, document WO 2004/028901 describes the use of the non-linear portion of the movement range of the Watt's linkage to achieve a "stepped input".

In a rotorcraft, the forces required to move the kinematics should be as small as possible. The most significant portion of these forces stem from friction in the kinematics arrangement. It is therefore desirable to arrange kinematics that generate the lowest possible friction so as to achieve satisfactory handling qualities for the rotorcraft.

Friction in the kinematics arrangement often occurs when a flexible kinematics element is forced into a curve with a small radius. Friction also occurs at the input and output of a flexible kinematics element where the flexible kinematics element is connected with an arrangement of levers and connecting rods to transfer forces and movement of a mechanical control signal.

As an example, the cable or race of a flexible kinematics element may be directly connected to a lever and receive a mechanical control signal from that lever. The lever performs a rotational movement on a circular track around a center of rotation, while the cable or race of the flexible kinematics element performs a linear movement. However, for any movement of the cable or race in the primary, linear direction there is also a secondary motion perpendicular to it, which increases the friction in the flexible kinematics element.

Moreover, the flexible kinematics element is often arranged in an approximately vertical plane to bridge the distance between the pilot's controls under the cockpit floor and the servo-actuators on the transmission deck below the rotorcraft's rotor, while the input into the flexible kinematics element under the cockpit floor is arranged in an approximately horizontal plane so as to facilitate the connection between the pilot's and the co-pilot's controls. As a result, the movement arcs of the levers are often perpendicular to the preferred bending direction of the flexible kinematics element, thereby leading to a further increased friction.

A variety of rotorcrafts use mechanical control signals and flexible kinematics elements. Examples include the Airbus Helicopters EC135 helicopter, the Airbus Helicopters MBB-BK117 D-2 helicopter, and the Bell 429 helicopter.

All these rotorcrafts feature a similar way of coping with the previously presented problems. In particular, these rotorcrafts use levers with significant radius in comparison to the movement range of the flexible kinematics element or straight sliding surfaces, sometimes optimized by the use of ball bearings.

Document US 4,819,896 A describes a hand-operated control system for aircraft that provides a redundant control system for pedal-operated controls. Each one of two pedals is attached through a linkage to a pivotally mounted, T-shaped swivel crank. A first pedal is mounted on a first arm of the swivel crank and a second pedal is mounted on the second arm of the swivel crank. A pedal rod interconnects the swivel crank with a pivotal bell crank. The end of the pedal rod is pivotally connected to the bell crank, and a cable assembly is attached to the pedal rod.

In summary, a key technical problem consists of transmitting a mechanical control signal without incurring unacceptable high friction in the kinematics chain. Prior art applications have had to compromise extensively on the routing of the flexible kinematics element and/or in weight or space requirements for the input/output kinematics.

It is, therefore, an objective to provide an apparatus for transmitting a mechanical control signal in a rotorcraft having low friction characteristics in the kinematics chain combined with low weight and space penalties.

This objective is solved by a rotorcraft which comprises the features of claim 1. More specifically, a rotorcraft comprises flight controls, at least one rotor, and an apparatus for transmitting a mechanical control signal between the flight controls and the at least one rotor. The apparatus includes a flexible kinematics element that has a longitudinal axis, a control signal transmitter, and an interface element. The flexible kinematics element includes a conduit, and a linear control signal conveyor that performs a linear movement relative to the conduit to convey the mechanical control signal. The control signal transmitter transmits the mechanical control signal. The interface element is coupled between the linear control signal conveyor and the control signal transmitter and comprises a first lever that is connected to the control signal transmitter and rotates around a first axis, a second lever that rotates around a second axis that is different than and parallel to the first axis, and an interconnecting element with a first attachment, a second attachment, and a third attachment, wherein the third attachment is equidistant from the first attachment and the second attachment, wherein the first attachment is connected to the first lever, the second attachment is connected to the second lever, and the third attachment is connected to the linear control signal conveyor, whereby the first axis of the first lever and the second axis of the second lever are on opposite sides of the longitudinal axis of the flexible kinematics element.

The herein described embodiments include a particular arrangement, which is commonly known as Watt's Linkage, of two levers, at least one of which is connected to further kinematics elements so as to receive commands in form of movement and force, and an interconnecting element between the two levers with the flexible kinematics element attached at the center of the interconnecting element.

The levers and interconnecting element are arranged such that the center of the interconnecting element and the attachment point of the flexible kinematics element perform an approximately straight curve within the designed movement range of the kinematics.

If either the first lever or the second lever or both are connected to kinematics that provide command inputs in form of a force and a movement then the arrangement provides an approximately linear input into the flexible kinematics element. In such an arrangement, the remaining secondary movement (i.e., the movement that is perpendicular to the primary movement) causes a friction in the arrangement that is negligible in comparison to other factors.

Note, that the direction of the mechanical control signal is reversible. In other words, the flexible kinematics element can apply the movement and force of the mechanical control signal onto downstream levers and rod arrangements.

The present embodiments provide a linearization of the mechanical control signal before the transmission into or out of the flexible kinematics element. This results in a significant reduction in friction at the interface of the flexible kinematics element.

The movement of the flexible kinematics element in the secondary movement direction is almost eliminated. Thus, the flexible kinematics element can be attached (to e.g. aircraft structure) close to the interface of the flexible kinematics element without risking an increased friction due to prevention of the flexible kinematics element taking its preferred routing. As a result, the required space envelope for installation of the kinematics at the ends of the flexible kinematics element can be reduced significantly.

The proposed arrangement comprises only simple, low cost mechanical elements. The additional elements, such as the second lever and the interconnection rod between the two levers, have a comparatively minor loading and can therefore be of a light weight design.

The arrangement requires no repositioning of the attachment point of the input kinematics in axial direction to accommodate the linearization elements. Connecting the first lever, which is closer to the flexible kinematics element, to an input kinematics may be useful if other installation constraints (e.g., the minimum bending radius of the flexible kinematics element) do not allow the flexible kinematics element to end at the preferred location as would be required for a single-lever arrangement.

The arrangement can be oriented in any plane as long as the path taken by the attachment point of the lever with the flexible kinematics element is in line with the cable or race of the flexible kinematics element. This entails a large potential for optimization of the kinematics as the input element can be positioned arbitrarily.

According to one aspect, the control signal transmitter performs a rotational movement around a rotational control signal transmitter axis.

According to one aspect, the interface element transforms the rotational movement of the control signal transmitter around the control signal transmitter axis into an at least substantially linear movement of the third attachment.

According to one aspect, the rotorcraft may further comprise at least one additional control signal transmitter that is connected to the first lever and transmits the mechanical control signal.

According to one aspect, a first sum of a first distance from the first axis to the first attachment and a second distance from the second axis to the second attachment is greater than a second sum of a third distance that is the shortest distance between the first axis and the longitudinal axis and a fourth distance that is the shortest distance between the second axis and the longitudinal axis.

According to one aspect, the ratio between the first distance and the third distance is selected to be greater than 1.1 and smaller than 1.5, and the ratio between the second distance and the fourth distance is selected to be greater than 1.1 and smaller than 1.5.

According to one aspect, the interconnecting element has at least a fork shaped portion with at least two prongs that comprise the first attachment.

According to one aspect, the mechanical control signal is transmitted from the control signal transmitter via the interconnecting element to the linear control signal conveyor.

According to one aspect, the mechanical control signal is transmitted from the linear control signal conveyor via the interconnecting element to the control signal transmitter.

According to one aspect, the flexible kinematics element is at least one of a ball bearing control cable or a Bowden cable.

According to one aspect, the linear control signal conveyor, the interconnecting element, and the control signal transmitter of the apparatus are coupled between the flight controls and the at least one rotor.

According to one aspect, the flight controls comprise at least one of anti-torque pedals, a cyclic stick, a collective lever, or a throttle control.

Embodiments are outlined by way of example in the following description with reference to the attached drawings. In these attached drawings, identical or identically functioning components and elements may be labeled with identical reference numbers and characters and are, consequently, only described once in the following description.
- Figure 1A is a diagram of an illustrative rotorcraft with an apparatus for transmitting a mechanical control signal in accordance with some embodiments,
- Figure 1B is a simplified side view of an illustrative rotorcraft with an apparatus for transmitting a mechanical control signal in accordance with some embodiments,
- Figure 2 is a diagram of an illustrative flexible kinematics element in accordance with some embodiments,
- Figure 3 is a diagram of an illustrative interface element that is coupled to a linear control signal conveyor in accordance with some embodiments,
- Figure 4A is a diagram of an illustrative interface element that is coupled between a control signal transmitter and a flexible kinematics element in accordance with some embodiments, and
- Figure 4B is a diagram of the illustrative interface element of Figure 4A that is coupled to a linear control signal conveyor in accordance with some embodiments.

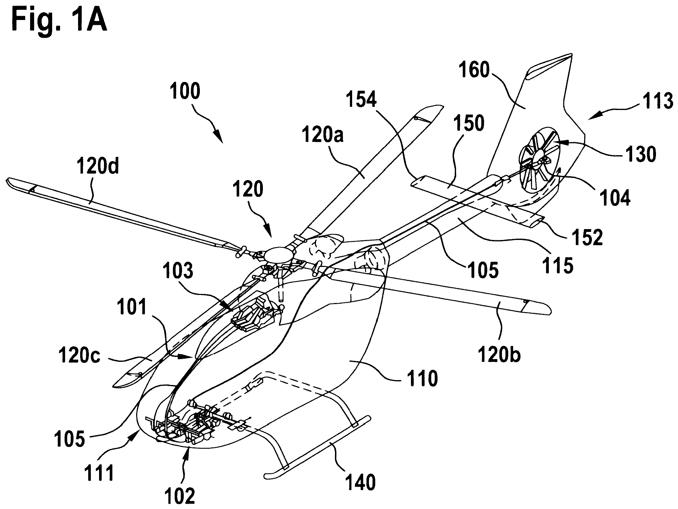

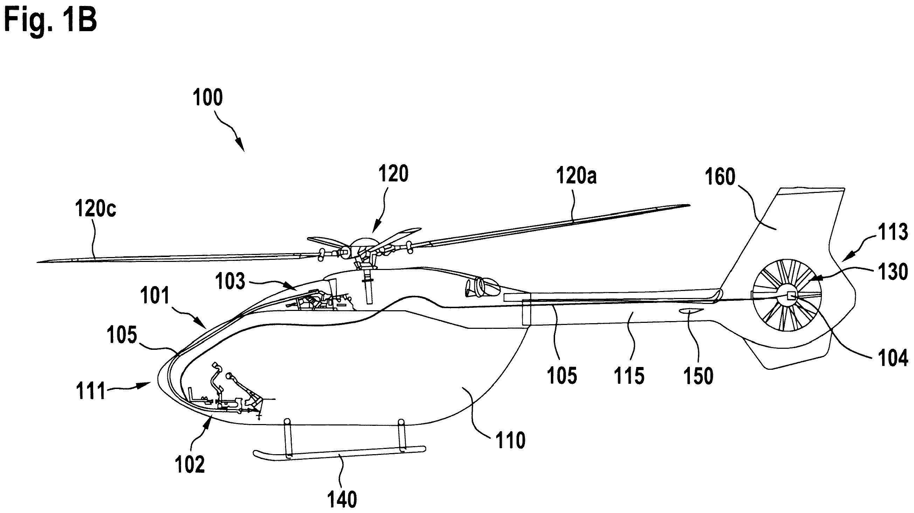

Figures 1A and 1B show a rotorcraft 100 with a fuselage 110 and a main rotor 120. Figure 1A shows a three-dimensional representation of rotorcraft 100, while Figure 1B illustrates a simplified side view of rotorcraft 100.

Rotorcraft 100 is illustratively embodied as a helicopter and the main rotor 120 is illustratively embodied as a multi-blade rotor having a plurality of rotor blades 120a, 120b, 120c, 120d.

It should, however, be noted that the present embodiments are not limited to helicopters and may likewise be applied to other rotorcrafts that use mechanical signal transmission between different areas of the rotorcraft. It should further be noted that the present embodiments may also be applied in cases where more than one main rotor is provided.

Illustratively, rotorcraft 100 may have a fuselage 110 that forms an airframe of rotorcraft 100. Fuselage 110 may be connected to a suitable landing gear 140 and a rear fuselage. As an example, the landing gear 140 may be a skid-type landing gear 140 as shown in Figures 1A and 1B. As another example, the landing gear 140 may include wheels. The rear fuselage may be connected to a tail boom 115. Fuselage 110 exemplarily forms a cabin defining a fuselage nose at a nose region 111 of rotorcraft 100.

By way of example, rotorcraft 100 may have a stabilizer wing 150. As shown, stabilizer wing 150 is attached to tail boom 115. If desired, stabilizer wing 150 may be attached to fin 160 to form a T-tail.

Rotorcraft 100 extends in longitudinal direction through nose region 111 and aft region 113, in transversal direction perpendicular to the longitudinal direction through left wing tip 152 and right wing tip 154 of stabilizer wing 150, and in vertical direction perpendicular to the longitudinal and transversal directions through the skid type landing gear 140 and main rotor 120.

By way of example, rotorcraft 100 may include at least one counter-torque device configured to provide counter-torque during operation, i.e. to counter the torque created by rotation of the at least one main rotor 120 for purposes of balancing the rotorcraft 100 in terms of yaw. If desired, the counter-torque device may be shrouded. The at least one counter-torque device is illustratively provided at an aft region 113 of rotorcraft 100 and may have a tail rotor 130.

The aft region 113 of rotorcraft 100 may include a fin 160 that is attached to tail boom 115, if desired. In some embodiments, fin 160 may be provided with a rudder. The rudder may be adapted to provide for enhanced directional control and for optimized yaw trim of rotorcraft 100. If desired, the rudder can be deflected to large angles to reduce a given lateral drag of fin 160 in sideward flight.

The main rotor 120 and, thus, the plurality of rotor blades 120a, 120b, 120c, 120d is drivable, i.e. controllable to influence an associated pitch attitude of the rotorcraft 100 in operation. Illustratively, the main rotor 120 defines a main rotor center and comprises a rotor mast. The rotor mast has a rotor mast axis that defines a rotational axis of the main rotor 120.

Rotorcraft 100 includes flight controls 102, 103, 104. The flight controls may include anti-torque pedals, a cyclic stick, a collective lever, a throttle control, or a combination thereof.

Flight controls may be located in different areas of rotorcraft 100. For example, rotorcraft 100 may have flight controls under the cockpit floor 102, flight controls on the upper deck 103, and/or flight controls in the tail boom 104.

Flight controls on the upper deck 103 may control main rotor 120, while flight controls in the tail boom 104 control tail rotor 130 and/or a rudder on fin 160. If desired, a pilot may generate commands in form of mechanical control signals, for example using flight controls under the cockpit floor 102 that are transmitted to the flight controls on the upper deck 103 and/or the flight controls in the tail boom 104.

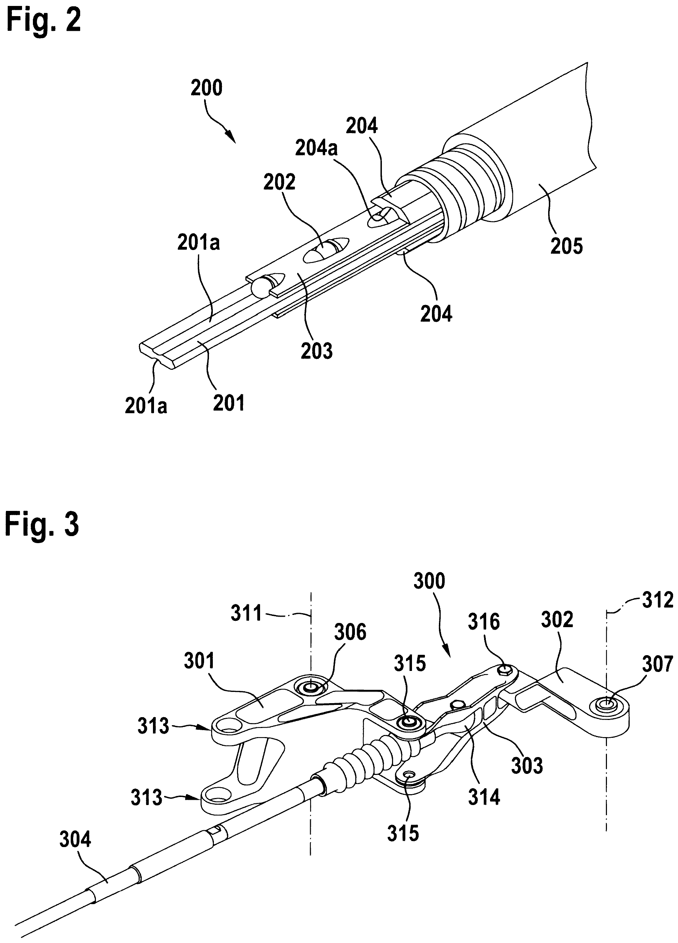

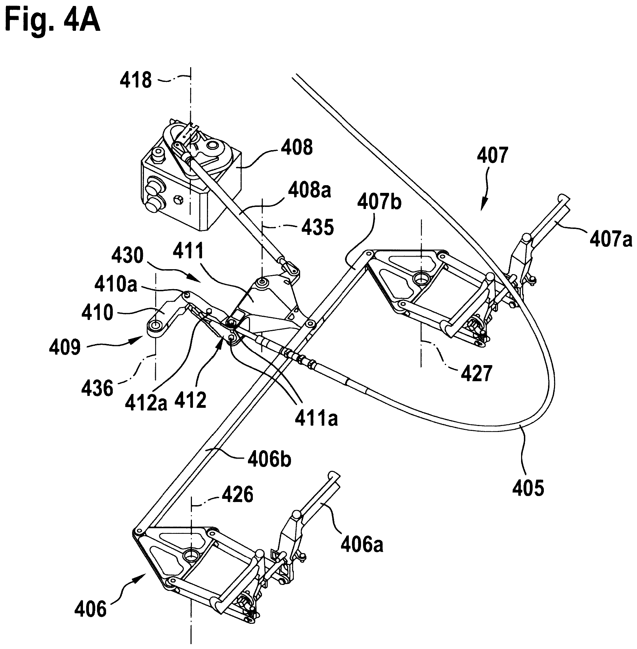

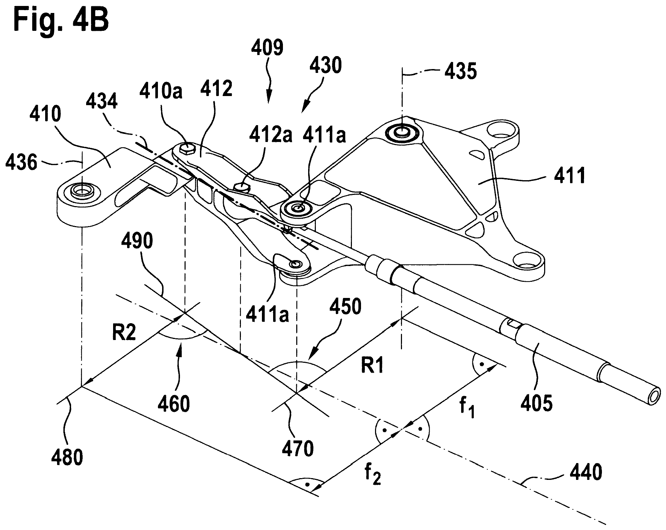

An apparatus for transmitting mechanical control signals (e.g., the apparatus shown in Figures 3, 4A, or 4B) may be coupled between the different flight controls 102, 103, 104, and is coupled between the flight controls 102, 103, 104 and main rotor 120, and/or between the flight controls 102, 103, 104 and tail rotor 130.

For example, an apparatus for transmitting mechanical control signals in rotorcraft 100 such as kinematics arrangement 101 may transmit the commands generated by the flight controls under the cockpit floor 102 to the flight controls on the upper deck 103 and/or to the flight controls in the tail boom 104.

Illustratively, kinematics arrangement 101 includes flexible kinematics element 105. Flexible kinematics element 105 includes a conduit and a linear control signal conveyor. desired, flexible kinematics element 105 may be a ball bearing control cable or a Bowden cable.

By way of example, the linear control signal conveyor may be coupled between the flight controls under the cockpit floor 102 and to the flight controls on the upper deck 103 or the flight controls in the tail boom 104. The linear control signal conveyor may perform a linear movement relative to the conduit to convey a mechanical control signal from the flight control under the cockpit floor 102 to the flight controls on the upper deck 103 and/or the flight controls in the tail boom 104.

Figure 2 is a diagram of an illustrative flexible kinematics element 200. As shown, flexible kinematics element 200 is illustratively embodied as a ball bearing control cable.

It should, however, be noted that the present embodiments are not limited to kinematics arrangements with a ball bearing control cable and may likewise be applied to kinematics arrangements with other flexible kinematics elements that allow to convey mechanical control signals between different areas of a rotorcraft.

Flexible kinematics element 200 may include a movable, approximately rectangular command transfer element, which is sometimes also referred to as central blade 201 or linear control signal conveyor 201. If desired, flexible kinematics element 200 may include spheres or balls 202, ball guides 203, external blades 204, and conduit 205.

Illustratively, the cross section of linear control signal conveyor 201 may have a significantly larger dimension in one direction than in the other direction. The larger sides of linear control signal conveyor 201 may each have a groove 201a. Similarly, the external blades 204 may each feature a groove 204a.

By way of example, spheres or balls 202 may run in grooves 201a and 204a between linear control signal conveyor 201 and respective external blades 204. Ball guides 203 may hold spheres or balls 202 in position relative to each other in the direction of motion, while linear control signal conveyor 201 and the external blades 204 act as guide for the spheres or balls 202.

Linear control signal conveyor 201, ball guides 203, and external blades 204 are fixed together in radial. direction by conduit 205. Conduit 205 may protect the arrangement from environmental influences, if desired.

Linear control signal conveyor 201 may have further equipment attached at the ends, which may enable the connection of additional elements. For example, a threaded rod may be attached to linear control signal conveyor 201. If desired, the threaded rod may be equipped with connectors like spherical bearings or forked brackets.

Flexible kinematics element 200 may have a preferred bending direction. For example, flexible kinematics element 200 may be preferably bent in direction of the significantly smaller dimension of the cross section of linear control signal conveyor 201. In fact, the spheres or balls 202 cause only rolling friction within grooves 201a and 204a when bending the flexible kinematics element 200 in direction of the significantly smaller dimension of the cross section of linear control signal conveyor 201.

Bending flexible kinematics element 200 in direction of the larger dimension of the cross section of linear signal conveyor 201 may cause a sliding friction between spheres or balls 202 and grooves 201a and 204a. The sliding friction may be significantly bigger than the rolling friction.

Forcing flexible kinematics element 200 into a curve with a small radius may also contribute to an increase in friction, because the difference in length between external blades 204 on the inside and the outside of the curve may cause forces on the spheres or balls 202.

Transmitting mechanical control signals into or out of the linear control signal conveyor 201 through an interface between a control signal transmitter and flexible kinematics element 200 may result in additional friction in the flexible kinematics element 200. For example, a rotational movement of a control signal transmitter at the input or output of flexible kinematics element 200 may cause a linear movement of linear control signal conveyor 201 in a direction parallel to linear control signal conveyor 201, but also a bending of flexible kinematics element 200 resulting at least in an increased rolling friction.

The additional friction at the interface between flexible kinematics element 200 and a control signal transmitter may be avoided or at least significantly reduced by linearizing the input/output movement at the interface.

Figure 3 is a diagram of an illustrative interface element that is coupled between a linear control signal conveyor such as linear control signal conveyor 201 and a control signal transmitter, whereby the interface element linearizes the movement of the control signal transmitter.

As shown in Figure 3, interface element 300 includes first and second levers 301, 302, and interconnecting element 303. First lever 301 may be connected via attachment 313 with a control signal transmitter. As shown, attachment 313 may have the form of a fork or a "Y" with two attachment points. However, attachment 313 may have a single or more than two attachment points, if desired.

First lever 301 may be rotatably attached at lever attachment 306 and rotate around first lever rotation axis 311 upon receiving a mechanical control signal from the control signal transmitter. Second lever 302 may be rotatably attached at lever attachment 307 and rotates around second lever rotation axis 312. First lever rotation axis 311 is parallel to second lever rotation axis 312.

Flexible kinematics element 304 defines a longitudinal axis, and first lever rotation axis 311 and second lever rotation axis 312 are arranged on opposite sides of the longitudinal axis. Interconnecting element 303 is connected with first lever 301 at first attachments 315 and with second lever 302 at second attachment 316. If desired, interconnecting element 303 may be rotatably attached with the first and second levers 301, 302 at first and second attachments 315, 316, respectively.

Interconnecting element 303 is connected to the linear control signal conveyor of flexible kinematics element 304 at third attachment 314. The third attachment 314 is equidistant from the first attachment 315 and the second attachment 316.

First and second levers 301, 302 and interconnecting element 303 may be arranged such that attachment 314 of the linear control signal conveyor of flexible kinematics element 304 moves along an approximately straight curve within the designed movement range of the kinematics.

As shown, interconnecting element 303 may have at least a fork shaped portion with at least two prongs that comprise the first attachment 315. If desired, the interconnecting element 303 may have a U-shaped portion that comprises the second attachment 316. Instead of a U-shaped portion, other suitable attachment means such as a spherical bearing or single plain bearing may likewise comprise the second attachment 316.

It should, however, be noted that interconnecting element 303 is not limited to a fork shape with at least two prongs. As an example, all attachments 314, 315, and 316 may have any number of parallel plates that are attached to each other at attachments 314, 315, and 316.

As an example, consider the scenario in which first lever 301 receives a command in form of a mechanical control signal from a control signal transmitter at attachment 313. In response to receiving the mechanical control signal, first lever 301 may perform a rotational movement around first lever rotation axis 311.

The rotational movement around first lever rotation axis 311 may cause a push or pull at first attachment 315 and thereby a corresponding push or pull at attachment 316. In response to a push or pull at attachment 316, second lever 302 may perform a rotational movement around second lever rotation axis 312. Thus, first and second attachments 315 and 316 move on a circular track around first and second lever rotation axes 311, 312, respectively.

While first and second attachments 315 and 316 move on a circular track around first and second lever rotation axes 311, 312, respectively, third attachment 314 moves on a near linear path and pushes or pulls on the linear control signal conveyor (e.g., linear control signal conveyor 201 of Figure 2) of flexible kinematics element 304.

In other words, interface element 300 has transformed a rotational movement around the first lever rotation axis 311 into an approximately linear movement of the linear control signal conveyor of flexible kinematics element 304. The remaining secondary movement perpendicular to the approximately linear movement is comparably small and the friction in flexible kinematics element 304 caused by the remaining secondary movement is small compared to other factors.

As another example, consider the scenario in which interconnecting element 303 receives a command in form of a mechanical control signal from a linear control signal conveyor of flexible kinematics element 304 at attachment 314. For example, linear control signal conveyor of flexible kinematics element 304 may push or pull on third attachment 314.

In response to receiving the mechanical control signal, third attachment 314 may move on a near linear path. while first and second attachments 315 and 316 move on a circular track around first and second lever rotation axes 311, 312, respectively, thereby rotatably moving first and second levers 301, 302.

If desired, first and/or second levers 301, 302 may transmit the mechanical control signal to other components. For example, first and/or second levers 301, 302 may transmit the mechanical control signal to the flight controls on the upper deck and/or to the flight controls in the tail boom (e.g., flight controls on the upper deck 103 and/or flight controls in the tail boom 104 of Figure 1).

In other words, interface element 300 has transformed a linear movement of the linear control signal conveyor of flexible kinematics element 304 into a rotational movement around the first lever rotation axis 311 and the second lever rotation axis 312. The remaining secondary movement perpendicular to the approximately linear movement at attachment 314 is comparably small and the friction in flexible kinematics element 304 caused by the remaining secondary movement is small compared to other factors.

Figure 4A is a diagram of an illustrative interface element 430, which is sometimes also referred to as linearization arrangement 409, that is coupled between a control signal transmitter and a flexible kinematics element in accordance with some embodiments.

Flexible kinematics element 405 includes a conduit (e.g., conduit 205 of Figure 2) and a linear control signal conveyor (e.g., linear control signal conveyor 201 of Figure 2). If desired, the conduit of flexible kinematics element 405 may be held in place, while the linear control signal conveyor performs a linear movement relative to the conduit to convey a mechanical control signal. Illustratively, flexible kinematics element 405 may be a ball bearing control cable, a Bowden cable, or any other appropriate flexible kinematics element that propagates a mechanical control signal through a linear movement.

As shown, interface element 430 may be coupled between the linear control signal conveyor of flexible kinematics element 405 and one or more control signal transmitters 406, 407, 408. The one or more control signal transmitters 406, 407, 408 may generate and/or transmit a mechanical control signal.

Control signal transmitters 406, 407, 408 may include input kinematics that transmit mechanical control signals via interconnecting element 412 to flexible kinematics element 405. Examples for input kinematics may include pilot input kinematics 406 such as anti-torque pedals, a cyclic stick, a collective lever, a throttle control, or other command input devices as inceptors 406a, co-pilot input kinematics 407 such as anti-torque pedals, a cyclic stick, a collective lever, a throttle control, or other command input devices as inceptors 407a, or auto flight actuator 408.

If desired, control signal transmitters 406, 407, 408 may include output kinematics that receive mechanical control signals from flexible kinematics element 405 via interface element 430. Examples for output kinematics may include flight controls on the upper deck or at the tail boom of a rotorcraft.

In other words, the linear control signal conveyor of flexible kinematics element 405, interface element 430, and one or more control signal transmitter of control signal transmitters 406, 407, 408 may be coupled between the flight controls in the cockpit and one or more rotors of a rotorcraft.

Illustratively, the control signal transmitters 406, 407, 408 may be coupled with lever 411 of linearization arrangement 409 through connections 406b, 407b, or auto flight connection 408a, respectively.

Interface element 430 includes first lever 411, second lever 410, and interconnecting element 412. First lever 411 may be connected to one or more control signal transmitters of control signal transmitters 406, 407, 408. If desired, second lever 410 may be connected to one or more control signal transmitters of control signal transmitters 406, 407, 408.

First lever 411 rotates around a first axis 435, and second lever 410 rotates around a second axis 436 that is different than the first axis 435. The first axis 435 of first lever 411 is parallel to the second axis 436 of second lever 410.

Flexible kinematics element 405 and interconnecting element 412 may define a longitudinal axis, and the first axis 435 of first lever 411 and the second axis 436 of second lever 410 are on opposite sides of the longitudinal axis.

Interconnecting element 412 of interface element 430 has second, and third attachments 411a, 410a, 412a, whereby the third attachment 412a is equidistant from the first and second attachments 411a, 410a. In other words, third attachment 412a may be arranged in the middle between first and second attachments 411a, 410a.

The first attachment 411a is connected to the first lever 411, the second attachment 410a to the second lever 410, and the third attachment 412a to the linear control signal conveyor of flexible kinematics element 405.

Illustratively, interconnecting element 412 may have at least a fork shaped portion with at least two prongs that comprise the first attachment 411a. If desired, the interconnecting element 412 may have a U-shaped portion that comprises the second attachment 410a. Instead of ae U-shaped portion, other suitable attachment means such as a spherical bearing or plain bearing may likewise comprise the second attachment. For example, interconnecting element 412 may have the shape of a "Y" with two attachment points. However, attachment 411a may have a single or more than two attachment points, if desired.

As an example, consider the scenario in which a pilot acts via inceptors 406a of pilot input kinematics 406 through a rotation around axis 426 on connection 406b, a co-pilot acts via inceptors 407a of co-pilot input kinematics 407 through a rotation around axis 427 on connection 407b, or an auto flight actuator 408 acts through a rotation around axis 418 or a push or pull movement on auto flight connection 408a.

In this scenario, first lever 411 may perform a rotational movement around axis 435. The rotational movement around axis 435 may cause a push or pull at attachment 411a and thereby a corresponding push or pull at attachment 410a. In response to a push or pull at attachment 410a, second lever 410 may perform a rotational movement around axis 436. Thus, first and second attachments 411a and 410a move on a circular track around first and second lever rotation axes 435, 436, respectively.

While first and second attachments 411a and 410a move on a circular track around axes 435, 436, respectively, third attachment 412a moves on an at least substantially linear path and pushes or pulls on the linear control signal conveyor of flexible kinematics element 405.

In other words, interface element 430 has transformed a rotational movement around axis 435 into an approximately linear movement of the linear control signal conveyor of flexible kinematics element 405. The remaining secondary movement perpendicular to the approximately linear movement is comparably small and the friction in flexible kinematics element 405 caused by the remaining secondary movement is small compared to other factors.

Figure 4B is a diagram of the illustrative interface element 430 of Figure 4A and further explains the geometries involved and the transformation of the rotational movement around axis 435 into an approximately linear movement of the linear control signal conveyor of flexible kinematics element 405.

As shown in Figure 4B, the first axis 435 of the first lever 411 is parallel to the second axis 436 of the second lever 410. Illustratively, the flexible kinematics element 405 defines a longitudinal axis 440, and the first axis 435 of the first lever 411 and the second axis 436 of the second lever 410 are on opposite sides of the longitudinal axis 440.

By way of example, the first axis 435 may have a first distance R1 from the first attachment 411a, and the second axis 436 may have a second distance R2 from the second attachment 410a. The first axis 435 may have a third distance f1 from the longitudinal axis 440, and the second axis 436 may have a fourth distance f2 from the longitudinal axis 440.

Illustratively, a rotation of first lever 411 around axis 435 may cause a movement of attachment 411a on a circular track at a distance R1 from axis 435. Simultaneously, second lever 410 may cause a movement of attachment 410a on a circular track at a distance R2 from axis 436. As a result, attachment 412a that attaches interconnecting element 412 with flexible kinematics element 405 may move on a substantially linear track along axis 434 parallel to longitudinal axis 440.

The quality of the linearization depends on the ratios between the sum of the first and second distances (i.e., R1 + R2) in relation to the sum of the third and fourth distances (i.e., f1 + f2).

The linearization of the movement at attachment 412a significantly decreases when the sum of the first and second distances (i.e., R1 + R2) is equal to or smaller than the sum of the third and fourth distances (i.e., f1 + f2).

By way of example, the sum of the first and second distances (i.e., R1 + R2) may be selected to be greater than the sum of the third and fourth distances (i.e., f1 + f2). Illustratively, the first distance R1 may be greater than the third distance f1, and the second distance R2 may be greater than the fourth distance f2.

As an example, the ratio between the first distance R1 and the third distance f1 may be selected to be greater than 1.1. As another example, the ratio between the first distance R1 and the third distance f1 may be selected to be smaller than 1.5. As yet another example, the ratio between the second distance R2 and the fourth distance f2 may be selected to be greater than 1.1 and smaller than 1.5.

If desired, the first and second distances R1, R2 may be selected to be equal. In some embodiments, the first and second distances R1, R2 may be selected to be different.

Illustratively, the first axis 435 and the first attachment 411a may define a first straight line 470, the second axis 436 and the second attachment 410a may define a second straight line 480, and the first attachment 411a and the second attachment 410a may define a third straight line 490. By way of example, the first straight line 470 and the third straight line 490 may define a first angle 450, and the second straight line 480 and the third straight line 490 define a second angle 460.

First angle 450 and second angle 460 may be selected such that the path of attachment 412a crosses longitudinal axis 440 multiple times when first lever 411 rotates around first axis 435 and/or second lever 410 around second axis 436, thereby improving the quality of the linearization. Alternatively, first angle 450 and second angle 460 may be selected to decrease the size of first lever 411 and second lever 410 (i.e., distances R1 and R2). In fact, smaller first and second levers 411, 410 with associated reduced linearization effect may be compensated by a suitable selection of first and second angles 450, 460, thereby resulting in constant linearization quality.

The selection of first angle 450 and second angle 460 may be based on distances R1, R2, f1, f2, and on the distance between the first attachment 411a and the second attachment 410a. Based on the selection of first angle 450 and second angle 460, the path of attachment 412a may deviate from longitudinal axis 440 to the right and to the left by the same amount, thereby minimizing the maximum deviation of the flexible kinematics element 405 from the longitudinal axis 440.

As shown, interconnecting element 412 has a Y-shape with an open and a closed end. Thereby, the flexible kinematics element 405 may be attached with the interconnecting element 412 at attachment position 412a approximately in the same plane as the centers of the attachments 411a, 410a of the first and second levers 411, 410.

The arrangement in which interconnecting element 412 has a Y-shape and flexible kinematics element 405 is attached at attachment 412a approximately in the same plane as the centers of the attachments 411a, 410a of the first and second levers 411, 410 may prevent any hysteresis in the kinematics arrangement as a result of the interconnecting element 412 tilting around longitudinal axis 434 due to gap or play in attachments 411a and/or 410a. At the same time, this arrangement also allows interface element 430 to function in motion within the designed movement range, while preventing the flexible kinematics element 405 from colliding with any portion of the first lever 411, second lever 410, interconnecting element 412, or with any other minor elements like screws or nuts necessary for connection of these elements.

It should be noted that the above-described embodiments are merely described to illustrate possible realizations of the present invention, but not in order to restrict the present invention thereto. Instead, multiple modifications and variations of the described embodiments are possible and should, therefore, also be considered as being part of the invention.

By way of example, second lever 410 of Figures 4A and 4B is shown without an attachment to a control signal transmitter 406, 407, 408, which are all connected with first lever 411. However, the control signal transmitters may be connected to any one of levers 410 or 411 to achieve a linearization effect at attachment 412a.

As another example, mechanical control signals are transmitted by control signal transmitter 406, 407, 408 in form of rotational movements as shown in Figure 4A. However, any movement that causes a rotational movement of lever 411 around axis 435 or that causes a rotational movement of lever 410 around axis 436 may be linearized using interface element 430. For example, a push or pull movement at lever 411 may cause a rotational movement of lever 411 around axis 435.

### Reference List

- 100: rotorcraft
- 101: kinematics arrangement
- 102: flight controls under the cockpit floor
- 103: flight controls on the upper deck
- 104: flight controls in the tail boom
- 105: flexible kinematics element
- 110: fuselage
- 111: nose region
- 113: aft region
- 115: tail boom
- 120: main rotor
- 120a, 120b, 120c, 120d: rotor blades
- 130: tail rotor
- 140: landing gear
- 150: stabilizer wing
- 152: left wing tip
- 154: right wing tip
- 160: fin
- 200: flexible kinematics element
- 201: central blade, linear control signal conveyor
- 201a: groove
- 202: ball
- 203: ball guide
- 204: external blade
- 204a: groove
- 205: conduit
- 300: interface element
- 301: first lever
- 302: second lever
- 303: interconnecting element
- 304: flexible kinematics element
- 306, 307: lever attachment
- 311: first lever rotation axis
- 312: second lever rotation axis
- 313, 314, 315, 316: attachment
- 405: flexible kinematics element
- 406: input kinematics, control signal transmitter
- 406a: pedals, inceptors
- 406b: connection
- 407: input kinematics, control signal transmitter
- 407a: pedals, inceptors
- 407b: connection
- 408: auto flight actuator, control signal transmitter
- 408a: auto flight connection
- 409: linearization arrangement
- 410: lever
- 410a: attachment
- 411: lever
- 411a: attachment
- 412: interconnecting element
- 412a: attachment
- 418, 426, 427: axis
- 430: interface element
- 434: axis
- 435, 436: axis
- 440: longitudinal axis
- 450, 460: angle
- 470, 480, 490: straight line
- R1,: R2 distance
- f1, f2: distance

## Claims

1. A rotorcraft (100) comprising flight controls (120, 103, 104), at least one rotor (120, 130), and an apparatus for transmitting a mechanical control signal between the flight controls (120, 103, 104) and the at least one rotor (120, 130), the apparatus comprising:
a flexible kinematics element (200, 405) that has a longitudinal axis (440) and comprises:
a conduit (205), and
a linear control signal conveyor (201) that performs a linear movement relative to the conduit (205) to convey the mechanical control signal;
a control signal transmitter (406, 407, 408) that transmits the mechanical control signal; and
an interface element (430) that is coupled between the linear control signal conveyor (201) and the control signal transmitter (406, 407, 408) and comprises:
a first lever (411) that is connected to the control signal transmitter (406, 407, 408) and rotates around a first axis (435),
a second lever (410) that rotates around a second axis (436) that is different than and parallel to the first axis (435), and
an interconnecting element (412) with a first attachment (411a), a second attachment (410a), and a third attachment (412a), wherein the first attachment (411a) is connected to the first lever (411), the second attachment (410a) is connected to the second lever (410), and the third attachment (412a) is connected to the linear control signal conveyor (201) of the flexible kinematics element (405),
**characterized in that**:
the third attachment (412a) is equidistant from the first attachment (411a) and the second attachment (410a), and the first axis (435) of the first lever (411) and the second axis (436) of the second lever (410) are on opposite sides of the longitudinal axis (440) of the flexible kinematics element (200, 405).

2. The rotorcraft (100) of claim 1, wherein the control signal transmitter (406, 407, 408) performs a rotational movement around a rotational control signal transmitter axis (426, 427, 418).

3. The rotorcraft (100) of claim 2, wherein the interface element (430) transforms the rotational movement of the control signal transmitter (406, 407, 408) around the control signal transmitter axis (426, 427, 418) into an at least substantially linear movement of the third attachment (412a).

4. The rotorcraft (100) of any one of the preceding claims, further comprising:
at least one additional control signal transmitter (406, 407, 408) that is connected to the first lever (411) or the second lever (410) and transmits the mechanical control signal.

5. The rotorcraft (100) of claim 1, wherein a first sum of a first distance (R1) from the first axis (435) to the first attachment (411a) and a second distance (R2) from the second axis (436) to the second attachment (410a) is greater than a second sum of a third distance (f1) that is the shortest distance between the first axis (435) and the longitudinal axis (440) and a fourth distance (f2) that is the shortest distance between the second axis (436) and the longitudinal axis (440).

6. The rotorcraft (100) of claim 5, wherein the ratio between the first distance (R1) and the third distance (f1) is selected to be greater than 1.1 and smaller than 1.5, and wherein the ratio between the second distance (R2) and the fourth distance (f2) is selected to be greater than 1.1 and smaller than 1.5.

7. The rotorcraft (100) of any one of the preceding claims, wherein the interconnecting element (412) has at least a fork shaped portion with at least two prongs that comprise the first attachment (411a).

8. The rotorcraft (100) of any one of the preceding claims, wherein the mechanical control signal is transmitted from the control signal transmitter (406, 407, 408) via the interconnecting element (412) to the linear control signal conveyor (201).

9. The rotorcraft (100) of any one of claims 1 to 7, wherein the mechanical control signal is transmitted from the linear control signal conveyor (201) via the interconnecting element (412) to the control signal transmitter (406, 407, 408).

10. The rotorcraft (100) of any one of the preceding claims, wherein the flexible kinematics element (200, 405) is at least one of a ball bearing control cable or a Bowden cable.

11. The rotorcraft (100) of claim 1, wherein the linear control signal conveyor (201), the interconnecting element (412), and the control signal transmitter (406, 407, 408) of the apparatus are coupled between the flight controls (120, 103, 104) and the at least one rotor (120, 130).

12. The rotorcraft (100) of claim 11, wherein the flight controls (120, 103, 104) comprise at least one of anti-torque pedals, a cyclic stick, a collective lever, or a throttle control.

## Patentansprüche

1. Drehflügelflugzeug (100) mit einer Flugsteuerung (120, 103, 104), mindestens einem Rotor (120, 130) und einer Vorrichtung zum Übertragen eines mechanischen Steuersignals zwischen der Flugsteuerung (120, 103, 104) und dem mindestens einen Rotor (120, 130), wobei die Vorrichtung umfasst:
ein flexibles kinematisches Element (200, 405), das eine Längsachse (440) aufweist und umfasst:
eine Leitung (205), und
einen linearen Steuersignalübermittler (201), der eine lineare Bewegung relativ zu der Leitung (205) ausführt, um das mechanische Steuersignal zu übermitteln;
einen Steuersignalübertrager (406, 407, 408), der das mechanische Steuersignal überträgt; und
ein Schnittstellenelement (430), das zwischen dem linearen Steuersignalübermittler (201) und dem Steuersignalübertrager (406, 407, 408) gekoppelt ist und umfasst:
einen ersten Hebel (411), der mit dem Steuersignalübertrager (406, 407, 408) verbunden ist und sich um eine erste Achse (435) dreht,
einen zweiten Hebel (410), der sich um eine zweite Achse (436) dreht, die sich von der ersten Achse (435) unterscheidet und parallel zu dieser verläuft, und
ein Verbindungselement (412) mit einer ersten Befestigung (411a), einer zweiten Befestigung (410a) und einer dritten Befestigung (412a), wobei die erste Befestigung (411a) mit dem ersten Hebel (411), die zweite Befestigung (410a) mit dem zweiten Hebel (410) und die dritte Befestigung (412a) mit dem linearen Steuersignalübermittler (201) des flexiblen kinematischen Elements (405) verbunden ist, **dadurch gekennzeichnet, dass**:
die dritte Befestigung (412a) äquidistant zu der ersten Befestigung (411a) und der zweiten Befestigung (410a) ist, und die erste Achse (435) des ersten Hebels (411) und die zweite Achse (436) des zweiten Hebels (410) auf gegenüberliegenden Seiten der Längsachse (440) des flexiblen kinematischen Elements (200, 405) liegen.

2. Drehflügelflugzeug (100) nach Anspruch 1, bei dem der Steuersignalübertrager (406, 407, 408) eine Drehbewegung um eine Drehsteuersignalübertragerachse (426, 427, 418) ausführt.

3. Drehflügelflugzeug (100) nach Anspruch 2, bei dem das Schnittstellenelement (430) die Drehbewegung des Steuersignalübertragers (406, 407, 408) um die Steuersignalübertragerachse (426, 427, 418) in eine zumindest im Wesentlichen lineare Bewegung der dritten Befestigung (412a) umwandelt.

4. Drehflügelflugzeug (100) nach einem der vorhergehenden Ansprüche, das ferner umfasst:
mindestens einen zusätzlichen Steuersignalübertrager (406, 407, 408), der mit dem ersten Hebel (411) oder dem zweiten Hebel (410) verbunden ist und das mechanische Steuersignal überträgt.

5. Drehflügelflugzeug (100) nach Anspruch 1, bei dem eine erste Summe eines ersten Abstands (R1) von der ersten Achse (435) zu der ersten Befestigung (411a) und eines zweiten Abstands (R2) von der zweiten Achse (436) zu der zweiten Befestigung (410a) größer ist als eine zweite Summe eines dritten Abstands (f1), der der kürzeste Abstand zwischen der ersten Achse (435) und der Längsachse (440) ist, und eines vierten Abstands (f2), der der kürzeste Abstand zwischen der zweiten Achse (436) und der Längsachse (440) ist.

6. Drehflügelflugzeug (100) nach Anspruch 5, bei dem das Verhältnis zwischen dem ersten Abstand (R1) und dem dritten Abstand (f1) größer als 1,1 und kleiner als 1,5 gewählt ist, und bei dem das Verhältnis zwischen dem zweiten Abstand (R2) und dem vierten Abstand (f2) größer als 1,1 und kleiner als 1,5 gewählt ist.

7. Drehflügelflugzeug (100) nach einem der vorhergehenden Ansprüche, bei dem das Verbindungselement (412) mindestens einen gabelförmigen Abschnitt mit mindestens zwei Zinken aufweist, die die erste Befestigung (411a) umfassen.

8. Drehflügelflugzeug (100) nach einem der vorhergehenden Ansprüche, bei dem das mechanische Steuersignal von dem Steuersignalübertrager (406, 407, 408) über das Verbindungselement (412) an den linearen Steuersignalübermittler (201) übertragen wird.

9. Drehflügelflugzeug (100) nach einem der Ansprüche 1 bis 7, bei dem das mechanische Steuersignal von dem linearen Steuersignalübermittler (201) über das Verbindungselement (412) an den Steuersignalübertrager (406, 407, 408) übertragen wird.

10. Drehflügelflugzeug (100) nach einem der vorhergehenden Ansprüche, bei dem das flexible kinematische Element (200, 405) ein kugelgelagerter Steuerzug oder ein Bowdenzug ist.

11. Drehflügelflugzeug (100) nach Anspruch 1, bei dem der lineare Steuersignalübermittler (201), das Verbindungselement (412) und der Steuersignalübertrager (406, 407, 408) der Vorrichtung zwischen der Flugsteuerung (120, 103, 104) und dem mindestens einen Rotor (120, 130) gekoppelt sind.

12. Drehflügelflugzeug (100) nach Anspruch 11, bei dem die Flugsteuerung (120, 103, 104) mindestens eines von Anti-Drehmoment-Pedalen, einem zyklischen Steuerhebel, einem kollektiven Steuerhebel oder einer Drosselsteuerung umfasst.

## Revendications

1. Giravion (100) comprenant des commandes de vol (120, 103, 104), au moins un rotor (120, 130), et un agencement pour transmettre un signal de commande mécanique entre les commandes de vol (120, 103, 104) et ledit au moins un rotor (120, 130), l'agencement comprenant :
un élément de cinématique flexible (200, 405) qui présente un axe longitudinal (440) et comprend :
une gaine (205), et
un transmetteur linéaire (201) de signal de commande qui accomplit un déplacement linéaire par rapport à la gaine (205) afin de transmettre le signal de commande mécanique ;
un émetteur (406, 407, 408) de signal de commande qui envoie le signal de commande mécanique ; et
un élément d'interface (430) accouplé entre le transmetteur linéaire (201) de signal de commande et l'émetteur (406, 407, 408) de signal de commande et comprend :
un premier levier (411) qui est raccordé à l'émetteur (406, 407, 408) de signal de commande et pivote autour d'un premier axe (435),
un second levier (410) qui pivote autour d'un second axe (436) qui est différent du premier axe (435) et parallèle à celuici, et
un élément d'interconnexion (412) avec une première fixation (411a), une deuxième fixation (410a), et une troisième fixation (412a), dans lequel la première fixation (411a) est raccordée au premier levier (411), la deuxième fixation (410a) est raccordée au deuxième levier (410), et la troisième fixation (412a) est raccordée au transmetteur linéaire (201) de signal de commande de l'élément de cinématique flexible (405),
**caractérisé en ce que** :
la troisième fixation (412a) est équidistante de la première fixation (411a) et de la deuxième fixation (410a), et le premier axe (435) du premier levier (411) et le second axe (436) du second levier (410) sont situés de part et d'autre de l'axe longitudinal (440) de l'élément de cinématique flexible (200, 405).

2. Giravion (100) selon la revendication 1, dans lequel l'émetteur (406, 407, 408) de signal de commande accomplit un déplacement à pivotement autour d'un axe de rotation (426, 427, 418) d'émetteur de signal de commande.

3. Giravion (100) selon la revendication 2, dans lequel l'élément d'interface (430) transforme le déplacement à pivotement de l'émetteur (406, 407, 408) de signal de commande autour de l'axe (426, 427, 418) d'émetteur de signal de commande en un déplacement au moins substantiellement linéaire de la troisième fixation (412a).

4. Giravion (100) selon l'une quelconque des revendications précédentes, comprenant en outre :
au moins un émetteur (406, 407, 408) de signal de commande supplémentaire qui est raccordé au premier levier (411) ou au second levier (410) et envoie le signal de commande mécanique.

5. Giravion (100) selon la revendication 1, dans lequel une première somme d'une première distance (R1) depuis le premier axe (435) jusqu'à la première fixation (411a) et d'une deuxième distance (R2) depuis le second axe (436) jusqu'à la seconde fixation (410a) est supérieure à une seconde somme d'une troisième distance (f1) qui est la plus courte distance entre le premier axe (435) et l'axe longitudinal (440) et d'une quatrième distance (f2) qui est la plus courte distance entre le second axe (436) et l'axe longitudinal (440).

6. Giravion (100) selon la revendication 5, dans lequel le rapport entre la première distance (R1) et la troisième distance (f1) est choisi pour être supérieur à 1,1 et inférieur à 1,5, et dans lequel le rapport ente la deuxième distance (R2) et la quatrième distance (f2) est choisi pour être supérieur à 1,1 et inférieur à 1,5.

7. Giravion (100) selon l'une quelconque des revendications précédentes, dans lequel l'élément d'interconnexion (412) présente au moins une partie en forme de fourche avec au moins deux branches qui comprennent la première fixation (411a).

8. Giravion (100) selon l'une quelconque des revendications précédentes, dans lequel le signal de commande mécanique est envoyé à partir de l'émetteur (406, 407, 408) de signal de commande via l'élément d'interconnexion (412) jusqu'au transmetteur linéaire (201) de signal de commande.

9. Giravion (100) selon l'une quelconque des revendications 1 à 7, dans lequel le signal de commande mécanique est envoyé à partir du transmetteur linéaire (201) de signal de commande via l'élément d'interconnexion (412) jusqu'à l'émetteur (406, 407, 408) de signal de commande.

10. Giravion (100) selon l'une quelconque des revendications précédentes, dans lequel l'élément de cinématique flexible (200, 405) est au moins l'un parmi un câble de commande à roulement à billes ou un câble Bowden.

11. Giravion (100) selon la revendication 1, dans lequel le transmetteur linéaire (201) de signal de commande, l'élément d'interconnexion (412), et l'émetteur (406, 407, 408) de signal de commande de l'agencement sont accouplés entre les commandes de vol (120, 103, 104) et ledit au moins un rotor (120, 130).

12. Giravion (100) selon la revendication 11, dans lequel les commandes de vol (120, 103, 104) comprennent au moins l'un parmi des pédales de commande anti-couple, un manche de commande de pas cyclique, un levier de commande de pas collectif, ou une commande des gaz.
